# EUROPEAN PATENT APPLICATION

(11) **EP 4 300 333 A1**
(43) Date of publication of application: **03.01.2024**
(21) Application number: 23178263.2
(22) Date of filing: 08.06.2023
(51) Int. Cl.: G06F 21/55, H04L 9/40, G06F 21/31

(54) **METHODS AND SYSTEMS FOR IDENTITY CONTROL**

(30) Priority: 30.06.2022 US 202217855360
(71) Applicant: CrowdStrike, Inc., Sunnyvale, CA 94086 (US)
(72) Inventor: Spurlock, Joel, Sunnyvale, 94086 (US); Zaitsev, Elia, Sunnyvale, 94086 (US); Brown, Daniel W, Sunnyvale, 94086 (US); Hobson, Thomas R, Sunnyvale, 94086 (US)
(74) Representative: Murgitroyd & Company

(57) **Abstract**

Methods and systems for detecting malicious attacks in a network and preventing lateral movement in the network by identity control are disclosed. According to an implementation, a security appliance may receive telemetry data from an endpoint device collected during a period of time. The security appliance may determine a threat behavior based on the telemetry data. The threat behavior may be associated with a user identity or user account. The security appliance further determines one or more additional user identities based on the user identity connected to the threat behavior. The security appliance may enforce one or more security actions on the user identity and the one or more additional user identities to prevent attacks to a plurality of computing domains from the endpoint device using the one or more additional user identities. The security appliance may be implemented on any network participants including servers, cloud device, cloud-based services/platforms, etc.

## Description

### BACKGROUND

In cybersecurity, threat behavior is any observed behavior which acquires access to a controlled entity. The threat behavior may include but is not limited to credential theft, a privilege escalation, or lateral movement. The controlled entity can be an entity where a security control is implemented, such as a user identity. The threat behavior may be detected when access to the controlled entity is necessary to proceed with lateral movement across an enterprise or between security domains. For example, a threat behavior may be observed when a controlled entity is used for lateral movement between industrial control systems and an enterprise, or between a public cloud and an enterprise.

The attackers can also utilize benign behaviors in sequence in order to steal credentials and laterally move through an enterprise to achieve their objective, e.g., ransomware encryption, data exfiltration, etc. To protect against identity threats, various types of controls can be implemented on an entity. In an existing solution, once an identity theft is detected on a device, all authentications from the device to other devices in the network are automatically blocked. However, automatic blocking the authentications also stops all lateral movements and interrupts normal business operations. In addition, such solution may also suffer from a fidelity problem. Therefore, existing solutions are not efficient to target specific accounts from detected malicious activities and intercept or suspend only the lateral movements as needed.

### SUMMARY

Accordingly there is provided a method, a system, and a computer readable storage medium as detailed in the claims that follow.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1 illustrates an exemplary network scenario, in which methods for identity control are implemented.
FIG. 2 illustrates an exemplary diagram of a security appliance, in which methods for identity control are implemented according to an embodiment of the present disclosure.
FIG. 3 illustrates an exemplary diagram of a security appliance, in which methods for identity control are implemented according to an embodiment of the present disclosure.
FIG. 4 illustrates an exemplary diagram of an identity control module of the security appliance, in which methods for identity control are implemented according to an embodiment of the present disclosure.
FIG. 5 illustrates an exemplary process for identity control according to an embodiment of the present disclosure.

### DETAILED DESCRIPTION

Techniques for detecting malicious attacks in a network and preventing lateral movement in the network by identity control are discussed herein. In an example, a method for identity control may be implemented on a security appliance in a network. The method for identity control may comprise an operation of receiving telemetry data from an endpoint device, an operation of determining a threat behavior associated with a first user identity based on the received telemetry data, an operation of determining a plurality of second user identities based on the first user identity, and an operation of implementing a security action on the plurality of second user identities to prevent attacks to a plurality of computing domains from the endpoint device.

In various examples, a method for preventing lateral movement by identity control may be implemented on one or more network participants. By way of example but without limitation, the one or more network participants may include the endpoint devices, the network server devices, the cloud services, etc. A software-based security appliance, for example, may be installed on the endpoint devices to detect the attack originated from the endpoint device and enforce the security actions. In another example, a hardware-based security appliance may be connected to the network to monitor the network traffic flow to inspect any suspicious behaviors originated from the endpoint devices. The hardware-based security appliance may be a network router or switch connected to the Internet. Additionally or alternatively, the hardware-based security appliance may be a server device in a public cloud, a private cloud, and/or a hybrid cloud. In yet other examples, the security appliance may be a cloud-based service provided through the managed security service providers (MSSPs). The cloud-based service may be delivered to various network participants on demand to monitor the activities on the network and/or the cloud environment.

In implementations, the security sensor(s) or agent(s) implemented on the endpoint devices may monitor the network traffic data and produce telemetry data. The telemetry data in general includes normal activities and unusual activities during a period of time. The telemetry data may also include metadata and/or synthetic context associated with these activities. The telemetry data is transmitted to the devices where the security appliance is implemented. The security appliance may analyze the telemetry data and determine a potential threat behavior based on the activities and their metadata/synthetic context. The potential threat behavior can be determined based on the known characters and/or patterns of the threat behaviors observed in the past. By way of example but without limitation, the threat behavior may include credential theft, privilege escalation, lateral movement, ransomware, or hands on keyboard activities, etc.

In some examples, the security appliance may determine a controlled identity in connection with the potential threat behavior. A controlled identity normally refers to an identity where a security control can be exhibited such as a user identity. The means of control can be any security configurations attached to the user identity, such as, single sign on control provided by the security providers. In various examples, the identity related to the potential threat behavior may be an email login information, a company intranet login credentials, a telephone number, the biometrics used for authentication such as, the user's fingerprint, facial features, retina or iris of the eye. The security appliance may implement one or more security actions to the controlled identity or the user identity to prevent further attacks on other endpoint devices using the same controlled identity or the user identity. The security actions may include but are not limited to enforcing automatic blocking of the authentication of the controlled identity to access other endpoint devices, enforcing multi-factor authentication (MFA) on the controlled identity to access other endpoint devices. The security appliance may further identity one or more additional user identities associated with the compromised identity from an identity database, either located locally or remotely.

In some examples, the security appliance may determine one or more security actions to intercept the lateral movement of the threat behavior to attack other network participants from the endpoint device using the one or more additional user identities. The security actions may include but are not limited to, increasing monitoring frequency, enforcing automatic blocking of the authentication to other domains using the one or more additional user identities, enforcing multi-factor authentication (MFA) to other domains using the one or more additional user identities. The multi-factor authentication may include requesting one-time password (OTP), sending a SMS text notifying the user to approve a request for access, requesting a token, requesting the user to operate the user device and/or application to recognize one or more biometrics for authentication, e.g., the user's fingerprint, facial features, retina or iris of the eye.

The present disclosure utilizes the identity control mechanism to enumerate all controllable identities once a threat behavior is detected and places one or more security actions on these controllable identities to halt lateral movement to other network participants. The controllable identities include a user identity associated with the detected threat behavior and one or more other user identities potentially under attack due to the detected threat behavior. Instead of blocking all lateral movements from the compromised endpoint device, the present disclosure targets on those controllable identities associated with the compromised user identity and blocks or suspends only the authentications to other network participants from the endpoint device using those user identities. Hence, the present disclosure can efficiently intercept the lateral movement of the threat to other network resources without halting the business operations that require normal lateral movements in the network.

In some implementations, the techniques discussed herein may be implemented on any network participants that can communicate to the network. Example implementations are provided below with reference to the following figures.

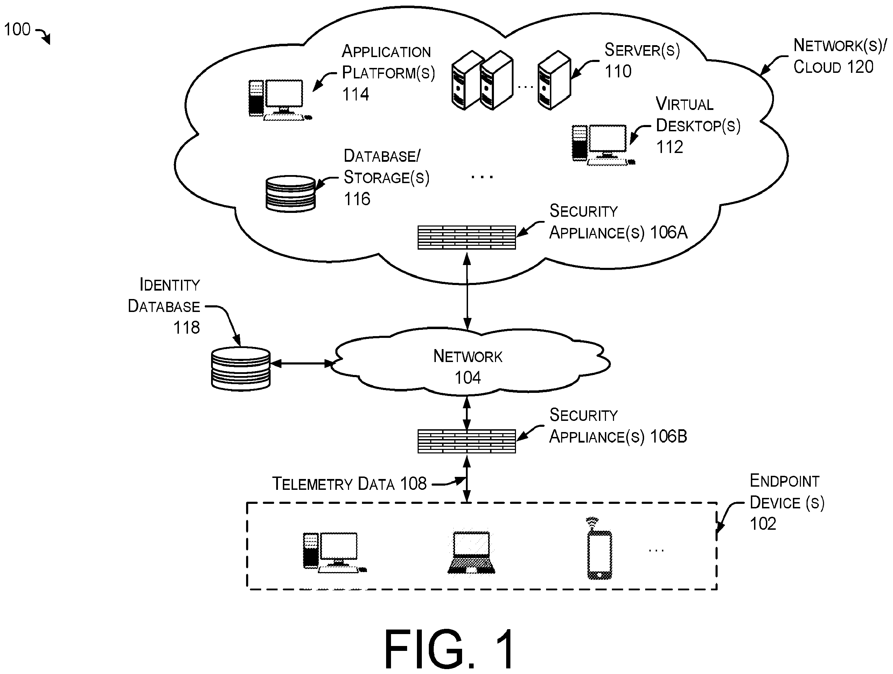

FIG. 1 illustrates an exemplary network scenario, in which methods for identity control are implemented.

As illustrated in FIG. 1, the network scenario 100, in which a security service system is implemented may include one or more endpoint device(s) 102 that can access, through a network 104, a variety of resources located in other network(s)/cloud(s) 120. The network scenario 100 may further include one or more security appliance(s) 106 (e.g., security appliance(s) 106A and security appliance(s) 106B) configured to provide an intrusion detection or prevention system (IDS/IPS), denial-of-service (DoS) attack protection, session monitoring, and other security services to the devices in the networks.

In various examples, the endpoint device(s) 102 may be any device that can connect to the network 104, either wirelessly or in direct cable connection. For example, the endpoint device(s) 102 may include but are not limited to a personal digital assistant (PDA), a media player, a tablet computer, a gaming device, a smart watch, a hotspot, a personal computer (PC) such as a laptop, desktop, or workstation, or any other type of computing or communication device. In some examples, the endpoint device(s) 102 may include the computing devices implemented on the vehicle including but are not limited to, an autonomous vehicle, a self-driving vehicle, or a traditional vehicle capable of connecting to internet. In yet other examples, the endpoint device(s) 102 may be a wearable device, wearable materials, virtual reality (VR) devices, such as a smart watch, smart glasses, clothes made of smart fabric, etc.

The network 104 may be a single network or a combination of multiple networks. For example, the network 104 may be a local area network (LAN), a wide area network (WAN), a public network, a private network, a proprietary network, a Public Telephone Switched Network (PSTN), the Internet, a wireless communication network, a virtual network, or any combination thereof.

In various examples, the network(s)/cloud(s) 120 can be a public cloud, a private cloud, or a hybrid cloud and may host a variety of resources such as one or more server(s) 110, one or more virtual desktop(s) 112, one or more application platform(s) 114, one or more database(s)/storage(s) 116, etc. The server(s) 110 may include the pooled and centralized server resources related to application content, storage, and/or processing power. The application platform(s) 114 may include one or more cloud environments for designing, building, deploying and managing custom business applications. The virtual desktop(s) 112 may image the operating systems and application of the physical device, e.g., the endpoint device(s) 102, and allow the users to access their desktops and applications from anywhere on any kind of endpoint devices. The database(s)/storage(s) 116 may include one or more of file storage, block storage or object storage.

It should be understood that the one or more server(s) 110, one or more virtual desktop(s) 112, one or more application platform(s) 114, and one or more database(s)/storage(s) 116 illustrate multiple functions, available services, and available resources provided by the network(s)/cloud(s) 120. Although shown as individual network participants in FIG. 1, the server(s) 110, the virtual desktop(s) 112, the application platform(s) 114, and the database(s)/storage(s) 116 can be deployed on one or more computing devices and/or servers in the network(s)/cloud(s) 120.

In implementations, the security appliance(s) 106 may include one or more types of firewalls. An example of the firewalls may be a packet filtering firewall that operates inline at junction points of the network devices such as routers and switches. The packet filtering firewall can compare each packet received to a set of established criteria, such as the allowed IP addresses, packet type, port number and other aspects of the packet protocol headers. Packets that are flagged as suspicious are dropped and not forwarded. Another example of the firewalls may be a circuit-level gateway that monitors TCP handshakes and other network protocol session initiation messages across the network to determine whether the session being initiated is legitimate. Yet another example of the firewalls may be an application-level gateway (also referred to as a proxy firewall) that filters packets not only according to the service as specified by the destination port but also according to other characteristics, such as the HTTP request string. Yet another example of the firewalls may be a stateful inspection firewall that monitors the entire session for the state of the connection, while also checks IP addresses and payloads for more thorough security. A next-generation firewall, as another example of the firewall, can combine packet inspection with stateful inspection and can also include some variety of deep packet inspection (DPI), as well as other network security systems, such as IDS/IPS, malware filtering and antivirus.

In various examples, the security appliance(s) 106 (i.e., the one or more firewalls) can be normally deployed as a hardware-based appliance, a software-based appliance, or a cloud-based service. The hardware-based appliance may also be referred to as network-based appliance or network-based firewall. The hardware-based appliance, for example, the security appliance(s) 106B, can act as a secure gateway between the network 104 and the endpoint device(s) 102 and protect the devices/storages inside the perimeter of the network 104 from getting attacked by the malicious actors.

Additionally or alternatively, the hardware-based appliance can be implemented on a cloud device (e.g., the security appliance(s) 106A) to intercept the attacks to the cloud assets. In some other examples, the security appliance(s) 106 can be a cloud-based service, in which, the security service is provided through managed security service providers (MSSPs). The cloud-based service can be delivered to various network participants on demand and configured to track both internal network activity and third-party on-demand environment.

Although not shown in FIG. 1, the security appliance(s) 106 can be software-based appliance implemented on the individual endpoint device(s) 102. The software-based appliance may also be referred to as host-based appliance or host-based firewall. The software-based appliance may include the security agent, the anti-virus software, the firewall software, etc., that are installed on the endpoint device(s) 102.

In FIG. 1, the security appliance(s) 106 is shown as an individual device and/or an individual cloud participant. However, it should be understood that the security appliance(s) 106A and the security appliance(s) 106B shown in FIG. 1 is for illustrative purposes. The network scenario 100 may include multiple security appliance(s) respectively implemented on the endpoint device(s) 102, the network 104, or the network(s)/cloud(s) 120. As discussed herein, the security appliance(s) 106 can be a hardware-based firewall, a software-based firewall, a cloud-based firewall, or any combination thereof. The security appliance(s) 106 can be deployed on a server (i.e., a router or a switch) or individual endpoint device(s) 102. The security appliance(s) 106 can also be deployed as a cloud firewall service delivered by the MSSPs.

The network scenario 100 may further include one or more identity database(s) 118 that store the information related to user identities used to log into various websites, resources, and/or mobile apps. In implementations, multiple user identities may be associated with a single user account. For example, user identities to access a fashion website, a bank website, and Google drive are associated with the user's Google account credentials. In another example, user identities to log into the company's virtual machine and data management system are associated with the employee's login account. In yet another example, user identities to access a public cloud provider storage bucket or source code repository may be associated with a user account registered on the public cloud provider. The identity database(s) 118 can store all user identities and their associated account information. In particular, the identity database(s) 118 may store information of all controllable identities where a security control is exhibited. The identity database(s) 118 may be connected to the network 104, as shown in FIG. 1. Alternatively or additionally, the identity database(s) 118 may be located in each of the endpoint device(s) 102.

In some examples, the security appliance(s) 106 may receive the telemetry data 108 from the endpoint device(s) 102 and determine whether a suspicious event exhibits. The telemetry data 108 is normally generated by the individual endpoint device. As discussed herein, each individual endpoint device may run one or more types of security agent (e.g., firewall software) in real-time. The security agent can automatically collect information related to system processes, sessions, user keyboard activities, packets and messages being transmitted, etc. When the security appliance(s) 106 is software-based appliance deployed on individual endpoint devices (i.e., host-based firewall), the telemetry data may be processed at each individual endpoint device. When the security appliance(s) 106 is hardware-based appliance or cloud-based appliance deployed on a server in the network (i.e., network-based firewall), the telemetry data 108 may be encrypted and sent to the security appliance(s) 106 for process.

In cases when a suspicious event or a threat behavior is detected at a particular endpoint device, some existing solutions may block all lateral movements to other network participants (e.g., the server(s) 110, virtual desktop(s) 112, application platform(s) 114, or database(s)/storage(s) 116, etc.) from the particular endpoint device. However, blocking all lateral movements from the particular endpoint device may also interrupt normal processes run thereon. In addition, false alarm on the threat detection may also occur, causing fidelity problem. According to the present disclosure, the security appliance(s) 106 may identify a comprised user identity based on the telemetry data 108 and discover one or more additional user identities related to the compromised user identity from the identity database 118. The security appliance(s) 106 may block authentications to the corresponding websites/apps/cloud resources using the compromised user identity and the additional user identities. Additionally or alternatively, the security appliance(s) 106 may enforce multi-factor authentications on the compromised user identity and the additional user identities to prevent potential malicious attacks to the corresponding websites/apps/cloud resources. By targeting a number of controllable identities, the security solutions according to the present disclosure can efficiently suspend subsequent attacks on secured entities while reduce unnecessary interrupts to business operations. Those subsequent attacks on secured entities may include but are not limited to lateral movement, ransomware, wormable exploits, or pivoting across security domains. In some implementations, the security appliance(s) 106 may be directly deployed at the network(s)/cloud(s) 120, i.e., a public cloud, a private cloud, or a hybrid cloud. Thus, the present disclosure can more efficiently intercept the malicious attacks from the endpoint device(s) 102 to the public cloud assets such as, application servers, virtual machines, public cloud provider storage buckets, , web-based Git or source code repository, etc.

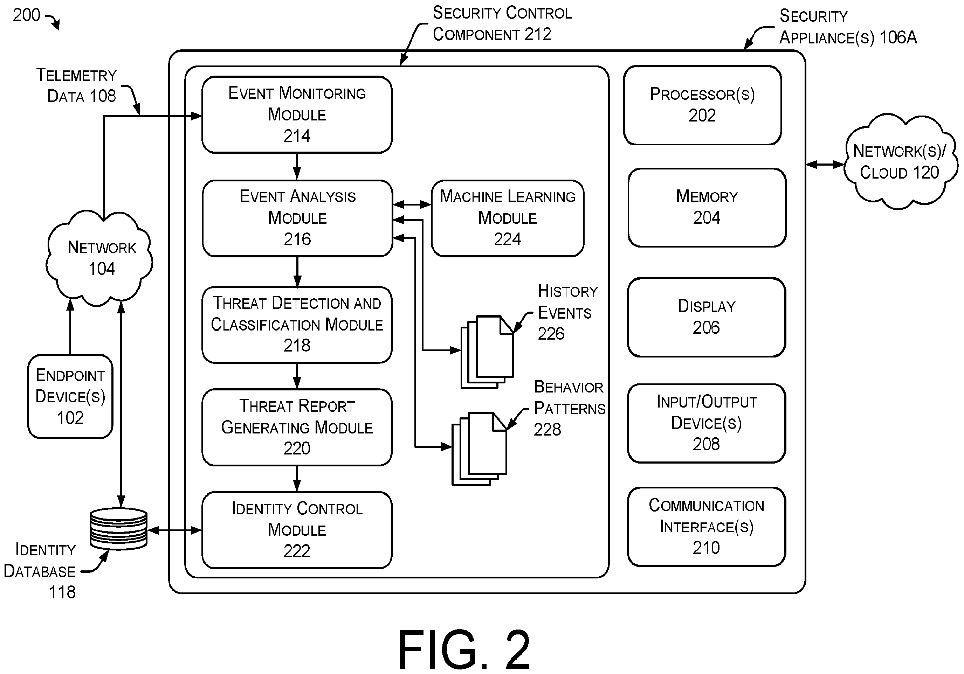

FIG. 2 illustrates an exemplary diagram of a security appliance, in which methods for identity control are implemented according to an embodiment of the present disclosure. The security appliance(s) shown in FIG. 2 may correspond to the security appliance(s)106A implemented as a cloud-based appliance, as illustrated in FIG. 1.

The exemplary diagram 200 of the security appliance(s) 106A may comprise one or more processor(s) 202, a memory 204, a display 206, one or more input/output device(s) 208, one or more communication interface(s) 210, and a security control component 212.

The security control component 212 of the security appliance(s) 106 may be configured to detect potential threats and enforce appropriate actions to prevent the malicious attacks to the network(s)/cloud(s) 120. The security control component 212 may include an event monitoring module 214, an event analysis module 216, a threat detection and classification module 218, a threat report generating module 220, an identity control module 222, and a machine learning module 224.

The event monitoring module 214 may be configured to monitor incoming event data from various endpoint device(s) 102 and transmitted through the network 104. The event data may include all types of data generated by the endpoint device(s) and transmitted through the network 104 including but are not limited to, TCP data packets, network session related messages, CPU/memory consumption data, etc. In some examples, the event data may be represented by the telemetry data 108 produced by a security agent or firewall software installed on the endpoint device(s) 102. The telemetry data may be encrypted before being transmitted to the network. The event monitoring module 214 may send the telemetry data 108 to the event analysis module 216.

The event analysis module 216 may be configured to determine whether the telemetry data 108 indicates a potential threat behavior. In some examples, the event analysis module 216 may determine the threat behavior based on a set of pre-configured behavior patterns 228. For instance, the event analysis module 216 may determine the threat behavior using signature-based detection techniques. In general, an attack signature defines the essential events required to perform the attack and the order, in which, they must be performed. A set of attack signatures may be pre-configured in the behavior patterns 228. The event analysis module 216 can compare the patterns of the event with the set of attack signatures in the behavior patterns 228. Once a match is identified, the event analysis module 216 may determine that a threat behavior occurred. Ransomware, for example, can be detected by monitoring the text strings and comparing the text strings to known digital signatures related to ransomware. Internet worm can also be detected by comparing the flow payloads with pre-generated signatures related to worms.

In another example, the event analysis module 216 may determine the threat behavior using anomaly-based detection techniques. In this case, a baseline of normal traffic and activity taking place on network and originated from the endpoint device(s) 102 may be stored in the behavior patterns 228. The event analysis module 216 may measure the present state of traffic and activity against this baseline information stored in the behavior patterns 228 in order to identify an anomaly. In yet another example, the event analysis module 216 may determine the threat behavior based on statistic analysis or machine learning using the machine learning module 224. The machine learning module 224 may be pre-trained using the history events 226 and the behavior patterns 228.

The threat detection and classification module 218 may further determine a type of the threat behavior based on the results passed by the event analysis module 216. For instance, the threat behavior may include but are not limited to a credential theft, a privilege escalation, a lateral movement, etc. The threat report generating module 220 may generate a threat report including the detected threat behavior, the type of the threat behavior, the compromised user account or user identity, and other synthetic context of the threat behavior. For example, the threat report may indicate that the user clicked a phishing link sent through an email in his/her Gmail account, the phishing link was related to a pre-approved loan application, the threat occurred when the user logged into his/her virtual desktop in the company network/cloud, etc. As discussed herein, the threat report enriched by the context data can provide a better interpretation of the threat behavior. The threat report generating module 220 may further provide the threat report to the identity control module 222.

Based on the threat report, the identity control module 222 may determine a propriate action to prevent subsequent attacks after the user identity is compromised. In some examples, the identity control module 222 may determine one or more additional user identities related to the compromised user account or user identity from the identity database(s) 118. The actions to prevent subsequent attacks may include blocking the authentications of the compromised user identity and the one or more additional user identities to access the network resources using one or more of the compromised user identity or the one or more additional user identities. The actions to prevent subsequent attacks may further include implementing multi-factor authentications of the compromised user identity and the one or more additional user identities to access the network resources using one or more of the compromised user identity or the one or more additional user identities.

In various examples, when a subsequent login using the compromised user identity or one additional user identity is detected, the identity control module 222 may request a one-time password (OTP) to be used for further authentication on the compromised user identity or one additional user identity when accessing the corresponding website/resource. The identity control module 222 may automatically generate a set of characters as the OTP and send it in an SMS text to the user's mobile phone, iPad, smartphone, and/or other devices. The identity control module 222 may further send an SMS text to the user device notifying the user to approve a request for access. Additionally or alternatively, the identity control module 222 may request the user to enter a token from an OTP-generating device and/or a software app. In some examples, the identity control module 222 may request the user to operate the user device and/or application to recognize one or more biometrics for authentication, e.g., the user's fingerprint, facial features, retina or iris of the eye. It should be understood that the multi-factor authentication methods described above are for illustrative purposes. The present disclosure is not intended to be limiting. Voice recognition, for example, may be also used to authenticate the user's credentials.

In various examples, the processor(s) 202 can be a central processing unit (CPU), a graphics processing unit (GPU), or both CPU and GPU, or any other type of processing unit. Each of the one or more processor(s) 202 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. Processor(s) 202 may also be responsible for executing all computer applications stored in memory 204, which can be associated with common types of volatile (RAM) and/or nonvolatile (ROM) memory.

In various examples, memory 204 can include system memory, which may be volatile (such as RAM), non-volatile (such as ROM, flash memory, etc.) or some combination of the two. Memory 204 can further include non-transitory computer-readable media, such as volatile and nonvolatile, removable and non-removable media implemented in any method or technology for storage of information, such as computer readable instructions, data structures, program components, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which can be used to store desired information and which can be accessed by the security appliance(s) 106A. Any such non-transitory computer-readable media may be part of the security appliance(s) 106A.

Display 206 can be a liquid crystal display or a graphic user interface (GUI). For example, display 206 may be a touch-sensitive display screen, and can then also act as an input device or keypad, such as for providing a soft-key keyboard, navigation buttons, or any other type of input. Input/output device(s) 208 can include any sort of output devices known in the art, such as display 206, speakers, a vibrating mechanism, and/or a tactile feedback mechanism. Input/output device(s) 208 can also include ports for one or more peripheral devices, such as headphones, peripheral speakers, and/or a peripheral display. Input/output device(s) 208 can include any sort of input devices known in the art. For example, input/output device(s) 208 can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism. The communication interface(s) 210 can include transceivers, modems, interfaces, antennas, and/or other components that perform or assist in communications with the telecommunication network, a Wi-Fi access point, and/or otherwise implement connections with one or more networks.

It should be understood that the elements of the security appliance(s) 106A shown in FIG. 2 are for the illustrative purposes. Although the event monitoring module 214, the event analysis module 216, the threat detection and classification module 218, the threat report generating module 220, the identity control module 222, and the machine learning module 224 are shown as individual elements, their functions can be integrated into one or more modules or elements. The history events 22 and the behavior patterns 228 can also be stored in a database coupled to the security appliance(s) 106A. In some examples, the telemetry data 108 may include the event data from multiple endpoint device(s). The security appliance(s) 106A may include some additional modules to parse and/or cluster the event data.

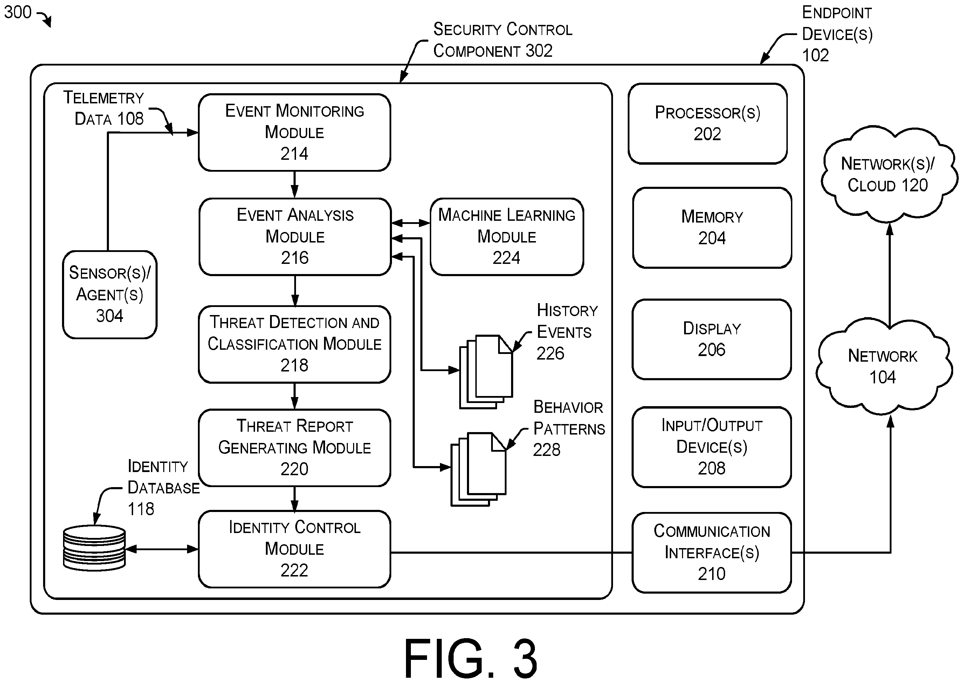

FIG. 3 illustrates an exemplary diagram of a security appliance, in which methods for identity control are implemented according to an embodiment of the present disclosure. The security appliance(s) shown in FIG. 3 may correspond to a software-based appliance implemented on the endpoint device(s) 102.

The exemplary diagram 300 of the security appliance may include a security control component 302 implemented on the endpoint device(s) 102. Similar to the security control component 212 of FIG. 2, the security control component 302 may include an event monitoring module 214, an event analysis module 216, a threat detection and classification module 218, a threat report generating module 220, an identity control module 222, and a machine learning module 224. The operations of the event monitoring module 214, the event analysis module 216, the threat detection and classification module 218, the threat report generating module 220, the identity control module 222, and the machine learning module 224 are similar to those elements shown in FIG. 2, and therefore, are not detailed herein.

In some examples, the security control component 302 may also include one or more sensor(s)/agent(s) 304 configured to collect event data generated by the endpoint device(s) 102. Some event data may be related to the system performance such as CPU and memory usages. Some event data may be related to the data transmitted to the networks such as, data packets, session initiation messages, TCP handshake messages, etc. The sensor(s)/agent(s) 304 may generate the telemetry data 108 based on the collected raw data and send the telemetry data 108 to the event monitoring module 214. As the security appliance(s) are implemented on the endpoint device(s), the telemetry data 108 do not need to be encrypted and transmitted over the network for analysis. The identity control module 222 may obtain the user identity information from the identity database(s) 118 locally coupled to the endpoint device(s) 102 and determine a suitable control action to prevent the attacks.

It should be understood that the elements of the security appliance(s) shown in FIG. 3 are for illustrative purposes. The security control component 302 may include more or fewer modules to process the telemetry data. Additionally or alternatively, the functions of the modules to perform the security control as shown in FIG. 3 may differ from those modules shown in FIG. 2. As discussed herein, the software-based security appliance(s) are implemented on the endpoint device(s) in FIG. 3 while the network-based security appliance(s), the hardware-based security appliance(s), and/or the cloud-based security appliance(s) are implemented on the network as shown in FIG. 2. According to the example of FIG. 3, the telemetry data is processed locally at the endpoint device(s) and may not need to be transmitted over the networks in an encrypted format. The processing of the telemetry data at the endpoint device(s) shown in FIG. 3 is less complex than the example shown in FIG. 2 where the hardware-based and/or cloud-based security appliance(s) are implemented. In addition, the user identity data associated with a particular endpoint device(s) may not be accessible to the network-based security appliance(s). Thus, the telemetry data sent through the network may also include the user identities linked to the compromised user account/identity, which requires additional operations to retrieve such information.

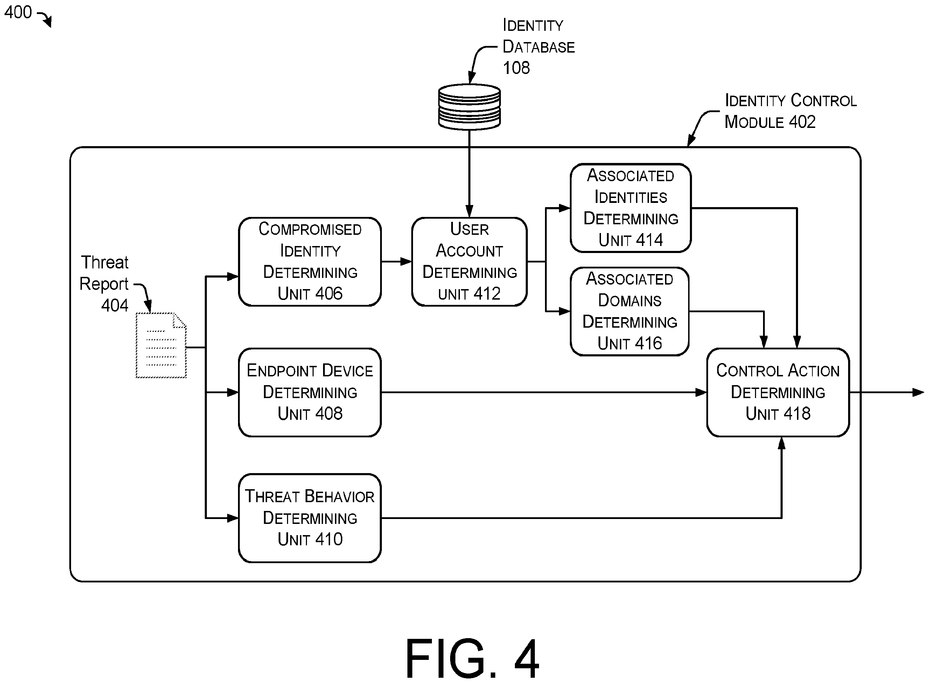

FIG. 4 illustrates an exemplary diagram of an identity control module of the security appliance, in which methods for identity control are implemented according to an embodiment of the present disclosure. The identity control module 402 shown in FIG. 4 may correspond to the identity control module 222 shown in FIG. 2 and FIG. 3.

The exemplary diagram 400 of the identity control module 402 may include a compromised identity determining unit 406, an endpoint device determining unit 408, a threat behavior determining unit 410, a user account determining unit 412, an associated identities determining unit 414, an associated domains determining unit 416, and a control action determining unit 418.

As discussed herein, the identity control module 402 may receive a threat report 404 from a threat report generating module (e.g., the threat report generating module 220 in FIG. 2 and FIG. 3). The threat report 404 may be aggregated information based on the telemetry data (e.g., the telemetry data 108 shown in FIG. 1) associated with an endpoint device (e.g., the endpoint device(s) 102 shown in FIG. 1).

The compromised identity determining unit 406 may be configured to retrieve the user identity compromised in the initial attack on the endpoints. In some examples, the compromised user identity may be an email address. In another example, the compromised user identity may be an employee's login credentials to the company intranet. In yet another example, the compromised user identity may be the login credentials to any website. The compromised user identity normally includes a username and password for login to a website, a mobile app, a company intranet or private cloud, etc.

The endpoint device determining unit 408 may be configured to retrieve information associated with the endpoint device, where the threat takes place. Such information may include the IP address of the endpoint device, the type of the endpoint device (i.e., desktop, laptop, smartphone, iPad, server device, etc.), the users registered to the endpoint device, the geographic location of the endpoint device(s).

The threat behavior determining unit 410 may retrieve the threat behavior as indicated in the threat report 404. The threat behavior may be any observed behavior which acquires access to a controlled entity (i.e., the user identity). Credential theft, for example, is a common threat behavior. The user credential may be exposed when the user accidentally clicked a phishing link received in his/her email account. In some examples, a malicious actor may steal the privilege credentials and escalate the current user identity to the privileged level. As the user at the privileged level can access more files/data in a company intranet or cloud. This exhibits a threat behavior to the company's data security.

In various examples, once a victim unwittingly clicks a link in a phishing email, the threat actor can control the endpoint device to search the network for vulnerable hosts to exploit and find privileged users. The threat actor further uses the privileged user's credential to move to other network devices, data centers/storages, cloud assets, causing data exfiltration. In some instances, the threat actor may carry out a ransomware attack by encrypting/locking the data in the data centers/storages during the lateral movement.

In some examples, after taking control of the endpoint device, computer worm codes may be copied the endpoint device and start to replicate itself to spread to other devices in the network. In yet other examples, a malicious attack may be related to hands on keyboard activities on the endpoint devices. For instance, a user operating the endpoint device may make several attempts to login the virtual desktop on the cloud.

In some examples, the troubled user identity may be related to a user account that can be determined by the user account determining unit 412. For instance, a stolen login credential to the company's data center may be tied to the user account of an employee. In another example, a stolen login credential to a bank account is also saved in a user's Google password management system. The user account determining unit 412 may also query the identity database(s) to obtain the user account and the associated identities information.

Once the user account linked to the troubled user identity is identified, the associated identities determining unit 414 may determine some additional user identities associated with the user account and potentially under attack. As discussed herein, the associated identities determining unit 414 can enumerate all controllable identities stored in that user account including the user account and the additional user identities potentially under attack. For example, the associated identities determining unit 414 can discover all username/passwords that are stored in connection to a user's Google account. In some examples, the associated identities determining unit 414 can identity all username/passwords that are visible to a company's administrator's user account.

In implementations, the associated domains determining unit 416 may be configured to identify the domain information corresponding to the controllable identities potentially in threat. For instance, the associated domains determining unit 416 may retrieve all IP addresses of the domains in threat. The associated domains determining unit 416 may also determine the categories of these domains, i.e., whether a domain is a network router/switch, an application server, a virtual desktop, a file storage, a block storage, or an object storage, etc.

The control action determining unit 418 may be configured to determine a propriate action to block and/or suspend the subsequent attacks to other domains once a threat behavior is detected on that endpoint device. The actions may be determined based on one or more of the endpoint device information, the threat behavior, the associated identities, or the associated domains, etc. For instance, if the threat behavior exhibits the character of the network worm, the control action determining unit 418 may enforce automatic multi-factor authentication (MFA) to all associated identities or block authentication of all associated identities, halting the lateral movement to other network devices from the compromised endpoint device. In another instance, if the threat behavior exhibits the character of the ransomware that is first observed on a first endpoint device and is laterally moving to a second endpoint device, the control action determining unit 418 may block the authentications to the second endpoint device from the identities being used on the first endpoint device. In yet another instance, if the threat behavior is determined to be generated by the hands keyboard activities on a first endpoint device, the control action determining unit 418 may increase monitoring the activities from the first endpoint device and implement automatic MFA when the user attempts to use a remote desktop protocol or other Windows authentication mechanism to laterally move to one or more second endpoint devices in the network.

It should be understood that the compromised identity determining unit 406, the endpoint device determining unit 408, the threat behavior determining unit 410, the user account determining unit 412, the associated identities determining unit 414, the associated domains determining unit 416, and the control action determining unit 418 shown in FIG. 4 are for illustrative purposes. The present disclosure is not intended to be limiting. The identity control module 402 may use one or more aggregated function modules to perform the operations described above. In some examples, the telemetry data instead of the threat report can be directly provided to the identity control module 402 to determine the controllable identities potentially in attack.

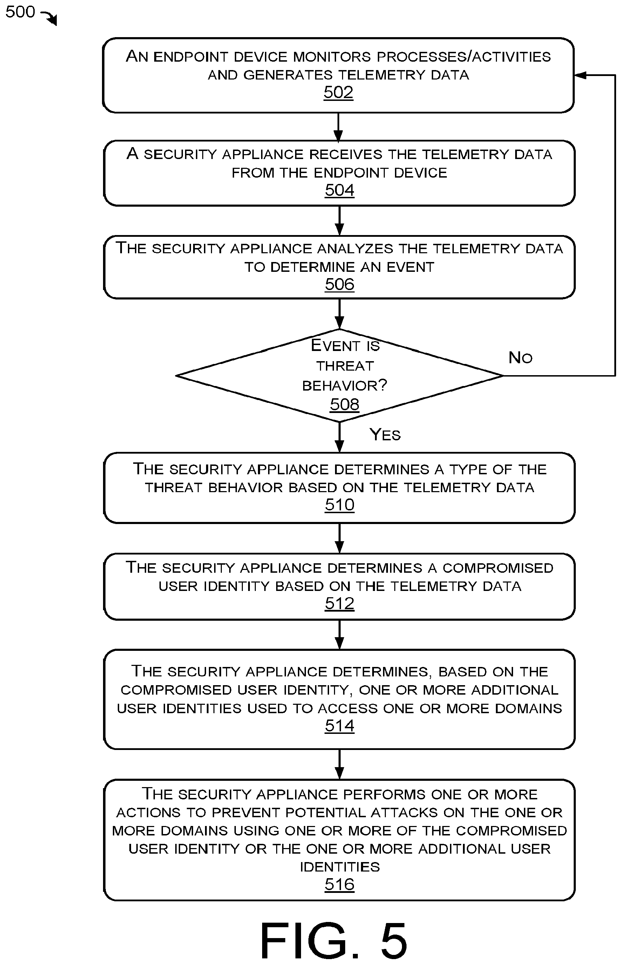

FIG. 5 illustrates an exemplary process for identity control according to an embodiment of the present disclosure. By way of example and without limitation, the processes are illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be combined (or omitted) in any order and/or in parallel to implement the processes. In some examples, multiple branches represent alternate implementations that may be used separately or in combination with other operations discussed herein.

At operation 502, an endpoint device may monitor processes/activities and generates telemetry data. As discussed herein, the endpoint device may be a desktop computer, a laptop computer, a smart phone, a tablet, a virtual reality (VR) device, etc., as describe above in connection with the endpoint device(s) 102 of FIG. 1. Some sensors and/or agents may be implemented on the endpoint device to collect data related to the processes and activities run on the endpoint device. The sensors and/or agents may collect raw traffic data transmitted through a communication interface (e.g., communication interface(s) 210 of FIG. 2) to the network. The raw traffic data may generally include all types of data packets such as TCP packets, protocol-related session initiation messages, session termination messages, session recovering messages, etc. In some examples, the raw traffic data may be aggregated and reported as the telemetry data. In some other examples, the endpoint device may add metadata and/or context data to the raw traffic data and generate the telemetry data. In general, the telemetry data includes both normal activities and suspicious activities information. The suspicious activities may be flagged and added context to provide more understanding of the suspicious activities.

At operation 504, a security appliance may receive the telemetry data from the endpoint device. In various examples, the security appliance may be installed on the endpoint device as a software-based appliance, implemented on a network server device/cloud server device as a hard-ware based appliance (e.g., the security appliance(s) 106A and 106B), or provided to various network devices as a cloud-based service.

The security appliance is normally configured to be capable of detecting and intercepting a variety of attacks/threats to the endpoint devices and the network facilities based on the telemetry data. For example, the security appliance may be configured to filter suspicious data packets from transmitting to the network. The security appliance may scrutinize the protocol header of each data packet and determine that information contained in the protocol header complies with a pre-set criteria. The security appliance drops the data packet if the header information does not meet the criteria. In another example, the security appliance may monitor the session initiation messages exchanged across the network and determine whether a session being initiated is legitimate. The security appliance may further monitor the messages exchanged during the entire session as well as inspecting the data packets transmitted during the session for more thorough scrutinization. In some examples, in addition to packet inspection with session inspection, the security appliance may also be configured to provide network security solutions such as intrusion detection or prevention system (IDS/IPS), denial-of-service (DoS) attack protection, etc.

At operation 506, the security appliance may analyze the telemetry data to determine an event. As discussed herein, the telemetry data in general includes both normal activities and suspicious activities information. The security appliance may need to parse the telemetry data and inspect each individual data packet to retrieve information related to an activity and/or an event.

At operation 508, the security appliance may determine whether the event is a threat behavior. In general, a threat behavior exhibits some characters that are different from a normal benign activity. For instance, a ransomware attack may start with creating a file in the endpoint device. Ransomware may stay hidden in the endpoint device until the files on the endpoint device are blocked or encrypted. If the telemetry data indicates that some new files are created, the security appliance may further check the text strings in the new files and compare those text strings with known ransomware patterns to determine whether it is a ransomware attack. In another example, computer worms could arrive as attachments in spam emails or instant messages (IMs). Opening the attachment in the spam email may trigger downloading a file from a website and automatic executing the file that consumes a lot of computer resources. If the telemetry data indicates that the user clicks a link through an email followed by a downloading from a website, the security appliance may check the packets transmitted to the website and/or determine the website is a malicious website. In some other examples, the telemetry data may indicate multiple attempts to login to a website or a remote desktop. The security appliance may further scrutinize the data packets transmitted through these attempts to determine whether a threat behavior occurs.

When the event is a threat behavior, at operation 510, the security appliance may determine a type of the threat behavior based on the telemetry data. As discussed herein, different threat behaviors exhibit different characters and/or patterns. A particular type of threat behavior may have some known patterns observed overtime. These known patterns may then be used to determine what type of threat of a suspicious activity/event indicated in the telemetry data. History data of the past events (e.g., the history events 226 of FIG. 2) and behavior patterns (e.g., the behavior patterns 228 of FIG. 2) may be used to further classify the threat behavior.

When the event is not a threat behavior, the operation returns to 502.

At operation 512, the security appliance may determine a compromised user identity based on the telemetry data. As discussed herein, the threat behavior may take control of an endpoint device when a user clicks a link on a website, in an email body, in an email attachment, in a text message, etc., through the endpoint device. The security appliance may determine a user identity and/or a user account that is used when the user clicks the link. For instance, the user identity and/or user account may include but are not limited to, Gmail account, MS Outlook account, login credentials to an organization or a company, etc.,

At operation 516, the security appliance may determine, based on the compromised user identity, one or more additional user identities used to access one or more domains. A Chrome user, for example, may use his/her Gmail account to initiate a web browsing session. During the web browsing session, the Chrome user may purchase products from various websites, complete transactions on various trading websites, uploading/downloading pictures and documents from Google drive, etc. The user identities to login to these websites and/or cloud device may be saved in Chrome. In cases when the Gmail account of the Chrome user is hacked, those saved user identities are also in threat. When a threat behavior is determined to be connected to a user identity/user account, the security appliance may identity all user identities that may be exposed to the hackers based on the compromised user identity/user account. In another example, a threat actor may hack a network administrator's login information. Upon detecting the threat behavior, the security appliance may enumerate the user identities that are managed by the network administrator but now under the threat of exposure.

At operation 516, the security appliance may perform one or more actions to prevent potential attacks to the one or more domains using one or more of the compromised user identity or the one or more additional user identities. In various examples, the actions to prevent potential attacks may be determined based on the type of the threat behavior. These actions may include but are not limited to, automatic blocking logins to these domains from the endpoint device using the compromised user identity and the one or more additional user identities, increasing monitoring frequencies on the compromised user identity and the one or more additional user identities, enforcing multi-factor authentications on the compromised user identity and the one or more additional user identities.

In a ransomware attack, when a threat behavior is detected on an endpoint device that exhibits a lateral movements to one or more other devices on the network, the security appliance may block the authentications to the one or more other device using one or more of the compromised user identity and the one or more additional user identities. In another example when a computer worm is detected on an endpoint device, the security appliance may identity the troubled user identity/user account from the telemetry data using Windows management instrumentation and block the authentications to other devices from the endpoint device. Additionally or alternatively, the security appliance may enforce the multi-factor authentication (MFA) on the authentications to the other devices using one or more of the compromised user identity and the one or more additional user identities, halting the lateral movement from the endpoint device to any subsequent devices. In yet another example, the threat behavior may be determined to be generated from hands on keyboard activities on an endpoint device. The security appliance may increase the monitoring frequency. Once the malicious actor attempts to move from the endpoint device to another device, e.g., a device or a virtual desktop on a network/cloud, the security appliance may automatically enforce MFA on the authentication to another device using one or more of the compromised user identity and the one or more additional user identities, thus, preventing lateral movements to other devices/virtual machines from the endpoint device.

As discussed herein, the security appliance may be implemented on various network elements such as the endpoint devices, the routers, the switches, the cloud devices, or be implemented as a cloud-based service provided through the managed security service providers (MSSPs). The actions to prevent the attacks to the one or more domains, therefore, are enforced from the network elements where the security appliance is implemented. For instance, the security appliance can be implemented on a cloud server or provided as a cloud-based service to automatically enforce the one or more actions to efficiently halt or suspend the lateral movement to attack one or more cloud assets from a remote endpoint device. The one or more cloud assets may include but are not limited to, application servers, virtual desktops, databases, different types of storages such as, public cloud provider storage buckets, web-based Git or source code repository, etc. In other examples, the security appliance can be implemented on a network router or switch to enforce the security actions to block the lateral movement from the endpoint device to the cloud assets through the network router or switch. In yet another example, the security appliance can be implemented on the endpoint device to intercept the lateral movement to other network devices or cloud assets from the endpoint devices.

The various techniques described herein may be implemented in the context of computer-executable instructions or software, such as program components, that are stored in computer-readable storage and executed by the processor(s) of one or more computing devices such as those illustrated in the figures. Generally, program components include routines, programs, objects, components, data structures, etc., and define operating logic for performing particular tasks or implement particular abstract data types.

Other architectures may be used to implement the described functionality and are intended to be within the scope of this disclosure. Furthermore, although specific distributions of responsibilities are defined above for purposes of discussion, the various functions and responsibilities might be distributed and divided in different ways, depending on circumstances.

Similarly, software may be stored and distributed in various ways and using different means, and the particular software storage and execution configurations described above may be varied in many different ways. Thus, software implementing the techniques described above may be distributed on various types of computer-readable media, not limited to the forms of memory that are specifically described.

### CONCLUSION

Although the subject matter has been described in language specific to structural features and/or methodological acts, it is to be understood that the subject matter is not necessarily limited to the specific features or acts described above. Rather, the specific features and acts described above are disclosed as example embodiments.

While one or more examples of the techniques described herein have been described, various alterations, additions, permutations and equivalents thereof are included within the scope of the techniques described herein.

In the description of examples, reference is made to the accompanying drawings that form a part hereof, which show by way of illustration specific examples of the claimed subject matter. It is to be understood that other examples can be used and that changes or alterations, such as structural changes, can be made. Such examples, changes or alterations are not necessarily departures from the scope with respect to the intended claimed subject matter. While the steps herein can be presented in a certain order, in some cases the ordering can be changed so that certain inputs are provided at different times or in a different order without changing the function of the systems and methods described. The disclosed procedures could also be executed in different orders. Additionally, various computations that are herein need not be performed in the order disclosed, and other examples using alternative orderings of the computations could be readily implemented. In addition to being reordered, the computations could also be decomposed into sub-computations with the same results.

## Claims

1. A method implemented on a security appliance for identity control, the method comprising:
receiving, from an endpoint device, telemetry data;
determining, based on the telemetry data, a threat behavior associated with a first user identity;
determining, based on the first user identity, a plurality of second user identities; and
implementing a security action on the plurality of second user identities to prevent attacks to a plurality of computing domains using at least one of the plurality of second user identities.

2. The method of claim 1, further comprising:
implementing the security action on the first user identity to prevent attacks to the plurality of computing domains using the first user identity.

3. The method of claim 1 or 2, further comprising:
determining context data associated with the threat behavior; and
determining, based on the context data, the security action on the plurality of second user identities.

4. The method of claim 3, wherein the context data indicates that the threat behavior is related to a ransomware actor intending to laterally move to the plurality of computing domains, and the security action further includes:
blocking authentication to the plurality of computing domains from the endpoint device using the plurality of second user identities.

5. The method of claim 3, wherein the context data indicates that the threat behavior is a lateral movement of a worm, and the security action further includes at least one of:
implementing multi-factor authentication, MFA, to the plurality of computing domains from the endpoint device using the plurality of second user identities, or
blocking authentication to the plurality of computing domains from the endpoint device using the plurality of second user identities.

6. The method of claim 3, wherein the context data indicates that the threat behavior is related to a keyboard activity on the endpoint device, and the method further comprises:
determining, based on the keyboard activity, an attempt to access a computing domain of the plurality of computing domains using a remote desktop protocol, and
implementing multi-factor authentication, MFA, to the computing domain from the endpoint device using a corresponding second user identity.

7. The method of any preceding claim, wherein the security appliance is communicatively connected to at least one of a public cloud, a private cloud, or a hybrid cloud.

8. The method of claim 7, wherein the security appliance is communicatively connected to the public cloud, and the plurality of computing domains are public domain assets including at least one of storage bucket on the public cloud, Git, source code repositories, or application servers.

9. A system comprising:
a processor, and
a memory storing instructions executed by the processor to perform the method of any preceding claim.

10. A computer-readable storage medium storing computer-readable instructions, that when executed by a processor, cause the processor to perform the method of any one of claims 1 to 8.
